# EUROPÄISCHE PATENTSCHRIFT

(11) **EP 4 066 808 B1**
(45) Veröffentlichungstag und Bekanntmachung des Hinweises auf die Patenterteilung: **08.01.2025**
(21) Anmeldenummer: 22156824.9
(22) Anmeldetag: 15.02.2022
(51) Int. Cl.: A61H 1/00, A61H 23/00, B25F 5/00

(54) **GERÄT, INSBESONDERE FÜR MASSAGE- UND BEHANDLUNGSZWECKE**
DEVICE, IN PARTICULAR FOR MASSAGE AND TREATMENT PURPOSES
APPAREIL, EN PARTICULIER DESTINÉ AUX MASSAGE ET AUX SOINS

(30) Priorität: 02.04.2021 CH 3442021
(43) Veröffentlichungstag der Anmeldung: 05.10.2022
(73) Patentinhaber: Xenaki, Georg, 8854 Siebnen (CH)
(72) Erfinder: Xenaki, Georg, 8854 Siebnen (CH)
(74) Vertreter: Luchs, Willi

(56) Entgegenhaltungen:
- CN-U- 211 675 296
- CN-U- 211 723 934
- DE-A1- 102009 002 970
- DE-A1- 102009 028 247
- US-A1- 2002 107 459

## Beschreibung

Die Erfindung betrifft ein Gerät, insbesondere für Massage- und Behandlungszwecke, welches ein von Hand tragbares Gehäuse, ein in diesem gelagertes und vorderseitig vorstehendes, von einem Antriebsmotor hin- und herbewegbares Berührungselement, dies nach dem Oberbegriff des Anspruchs 1.

Ein bekanntes Massage-, Wellness- und Behandlungsgerät gemäss der Druckschrift EP-A-1 913 921 umfasst einen Handteil mit einer röhrenförmigen Hülle und einem darin befindlichen elektrischen Mikromotor, der ein Untersetzungsgetriebe antreibt. Es ist ein Körper eines Ansatzhalters im distalen Ende der Hülle befestigt ist, in dem ein Tauchkolben gleitet, und ausserdem ist ein Umwandlungsmechanismus vorgesehen, der eine Ausgangswelle des Untersetzungsgetriebes mit dem Tauchkolben verbindet, deren Drehbewegung in eine lineare Hin- und Herbewegung des Tauchkolbens umgewandelt wird. Ein Kopf am Tauchkolben ist dazu bestimmt, für die Massage bzw. die Behandlung der zu behandelnden Person angedrückt zu werden. Der Umwandlungsmechanismus umfasst eine Rolle, die am innenseitigen Ende des Tauchkolbens entlang einer Achse schwenkt, die einen nicht rechten Winkel zu der Längsachse des Tauchkolbens bildet, wobei diese Achse adäquat zum Winkel der frontseitigen Seite einer Nocke des Mikromotors verläuft, welche mit der Rolle zur Erzeugung der Hubbewegung zusammenwirkt.

Dieses Gerät bewirkt aufgrund der üblicherweise erzeugten schnellen Bewegungen des Massage- bzw. Behandlungskopfes relativ hohe Lärm- und überdies Vibrationsgeräusche. Es können bei diesem Gerät gesteuert bis zu mehr als 25 Impulse pro Sekunde generiert werden und es entstehen dadurch Lärmpegel von bis zu 60dB(A). Für die Bedienungsperson, die das Gerät in der Hand hält, kann es beim längeren Massieren bzw. Behandeln sehr belastend sein und bei regelmässigem Verwenden sogar gesundheitliche Probleme hervorrufen.

Das Dokument CN 211 675 296 U offenbart ein Massagegerät, welches aus einem pistolenartigen Gehäuse mit einem Motor, einem mit diesem drehverbundenen Exzenter, einem mit letzterem gekoppelten Bewegungsteil, einem an diesem schwenkbar gehaltenen zweiten beweglichen Teil, einer mit diesem verbundenen Adapter und einer bewegbaren Kupplung besteht, die von einer Gummihülse ummantelt ist. Es sind zudem eine Montageplatte für den Motor und vier antivibrierende Dichtungsringe vorgesehen.

Bei der Massagevorrichtung gemäss der Druckschrift US 2002/107459 A1 ist ebenfalls eine abgewinkelte Übertragung der Drehbewegung des Motors zu dem hin- und herbewegbaren Schaft vorgesehen. Der Motor ist in dem griffförmigen Gehäuse via diese Stützen befestigbar. Mit dieser Massagevorrichtung besteht primär ein andersartiger Aufbau, weil dieser Schaft nicht im Gehäuse gelagert ist, sondern im Motor.

Im Dokument CN 211 723 934 U ist eine Einrichtung mit einem Gehäuse, einem Motor mit einer Energieversorgung, einem Kraftübertragungsmechanismus und einem hin- und herbewegbaren Massagekopf offenbart. Der Motor ist von einer elastischen Dämpfmaterialschicht, einer Schallabsorptionsschicht und einer Schallisolationsschicht umgeben. Mit dieser Lärmdämpfvorrichtung ist zwar der Motor geschützt, aber nicht der Kraftübertragungsmechanismus und der von diesem hin- und herbewegbare Massagekopf.

In der Offenlegungsschrift DE 10 2009 002 970 A1 ist eine Handwerkzeugmaschine offenbart, die ein Gehäuse mit mindestens zwei separaten Gehäuseteilen und einem Schwingungsreduktionselement aufweist, welches zwischen einem Befestigungsbauteil mit dem weiteren Gehäuseteil und einem Handgriff angeordnet ist. Damit ist aber ebenfalls nur eine Schwingungsreduktion beim Antriebsmotor offenbart.

Der Erfindung liegt die Aufgabe zugrunde, diese Nachteile zu vermeiden und ein Gerät nach der eingangs erwähnten Gattung derart weiterzubilden, dass dieses im Betriebszustand für den Benutzer bzw. Patienten angenehmer beim Massieren, Behandeln oder dergleichen zu handhaben ist.

Diese Aufgabe ist erfindungsgemäss durch die Merkmale des Anspruchs 1 gelöst.

Es wird zumindest zwischen dem Antriebsmotor und dem Gehäuse des Gerätes wenigstens eine geräusch- bzw. schwingungsdämmende Lagerung angeordnet, so dass ein unmittelbarer Kontakt zwischen dem Antriebsmotor und dem Gehäuse eliminiert ist und eine Entkoppelung der geräuschübertragenden Verbindung auf das Gehäuse erzielt wird.

Dies führt zu einem ruhigeren und angenehmeren Festhalten des Gerätes beim Massieren oder Behandeln. Damit können grössere Hübe und höhere Impulsfrequenzen realisiert werden, ohne dass die Geräusche und Schwingungen merklich ansteigen. Dies ist ausserdem darauf zurückzuführen, dass eine Erhöhung der Differenz zwischen der Eigen- und Erregerfrequenz erzeugt wird.

Mit dieser überraschenden erheblichen Geräuschreduktion des Gerätes nach der Erfindung ergibt sich ein weiterer Vorteil ebenso bei einem Patienten oder einer zu massierenden Personen darin, dass insbesondere bei einer Behandlung oder Massage im Kopfbereich, wie zum Beispiel bei einer Kiefermassage oder einer Atlastherapie bzw. -korrektur, die vom Gerät entstehenden Geräuschemissionen geringer sind.

Sehr vorteilhaft ist der Antriebsmotor zumindest an seinem Umfang auf der hinteren Seite und vorne bei seiner Antriebswelle durch je ein Lagerelement als geräusch- bzw. schwingungsdämmende Lagerung innen im Gehäuse abgestützt. Dies ermöglicht eine konstruktiv einfache und sehr wirksame Dämmung.

Beim erfindungsgemässen Gerät ist im Gehäuse ein vom Antriebsmotor angetriebener Hubmechanismus und eine mit diesem gekoppelte Führungseinheit für einen Stössel mit dem vorstehenden Berührungselement integriert. Es ist dabei vorderseitig wenigstens ein Führungsstab der Führungseinheit jeweils in einem Lagerelement in einer Bohrung im Gehäuse geräusch- bzw. schwingungsdämmend geführt, so dass die Führungseinheit ebenfalls beabstandet innerhalb des Gehäuses angeordnet ist.

Damit stehen der Antriebsmotor, der mit diesem verbundene Hubmechanismus und die Führungseinheit als bewegliche Komponenten einzig durch diese Lagerelemente mit dem Gehäuse in Kontakt.

Zweckmässigerweise sind diese Lagerelemente ring-, segment- oder andersförmig ausgebildet und sie bestehen aus Kunststoff, wie aus einem schnurförmigen Silikon, einem O-Ring oder dergleichen, oder aus Materialien mit schwingungsdämmenden Eigenschaften.

Als Variante können die Lagerelemente aus Druck- oder Zugfedern bestehen, um die Wirkung der Dämmung noch zu erhöhen.

Die Erfindung ist nachfolgend anhand von Ausführungsbeispielen unter Bezugnahme auf die Zeichnung näher erläutert. Es zeigt:
- Fig. 1: einen Längsschnitt eines erfindungsgemässen Gerätes;
- Fig. 2: einen Teilschnitt des Gerätes nach Fig. 1;
- Fig. 3: eine perspektivische Explosionsansicht eines Käfigrings und eines Kugelkäfigs je teilweise mit zwei darin rotierbaren Kugeln des Gerätes nach Fig. 1;
- Fig. 4: eine andere perspektivische Explosionsansicht wie gemäss Fig. 3; und
- Fig. 5: einen Längsschnitt eines Gehäuses bzw. eine Ansicht eines erfindungsgemässen Gerätes mit angedeuteten Federelementen als geräusch- bzw. schwingungsdämmende Lagerung.

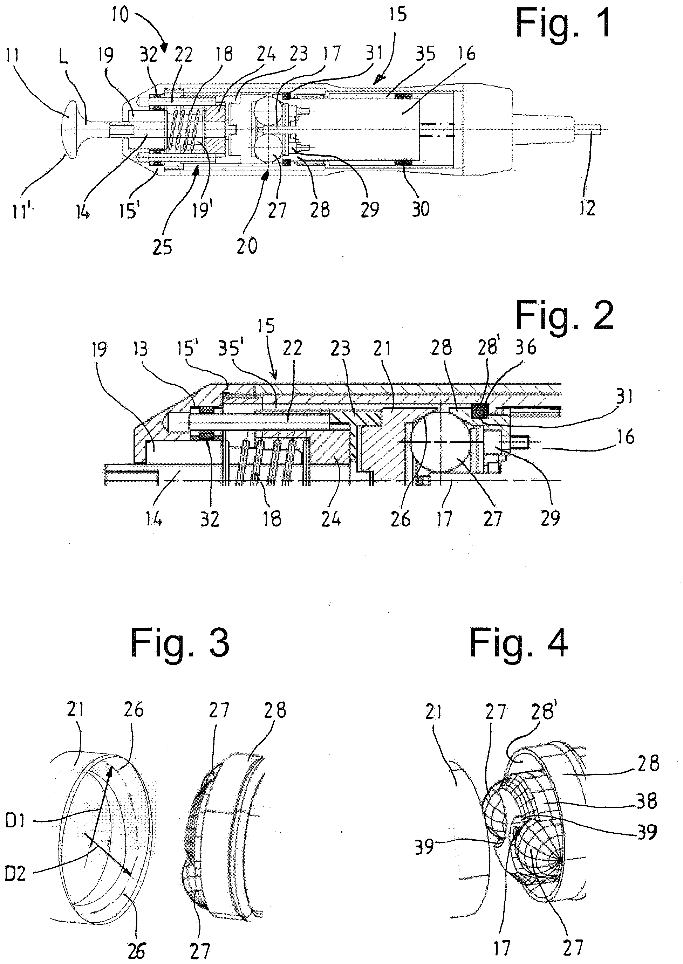

Fig. 1 bis Fig. 4 zeigen ein Gerät 10, insbesondere für Massage- und Behandlungszwecke, welches stabförmig ausgebildet ist und mit einem nach aussen geführten elektrischen Kabel 12 für die Stromversorgung eines Antriebsmotors 16 ausgestattet ist. Im Prinzip könnte auch ein Ackumulator integriert sein, so dass kein fest angeschlossenes Elektrokabel in diesem enthalten sein müsste und eine Steckdosenelement beim Gehäuse vorgesehen wäre.

Ein solches Gerät 10 kann für übliche oder spezielle Massagen verwendet werden, wie zum Beispiel für klassische Muskel- oder für Wellnessmassagen. Es eignet sich aber ebenso für verschiedene Behandlungen, wie für eine Triggerpunkt-, Faszienbehandlung oder ähnlichem, oder für eine Atlastherapie, bei der dieser Atlas als erster Halswirbel des menschlichen Körpers mittels einer speziellen Massage behandelt wird.

Dieses Gerät 10 kann selbstverständlich auch bei Tieren, insbesondere Pferden, für Massagen oder Behandlungen eingesetzt werden, wie zum Beispiel für eine sehr wirksame Faszien-Therapie bei einem Pferd.

Das Gerät 10 setzt sich aus einem von Hand tragbaren mehrteiligen Gehäuse15, einem darin angeordneten Antriebsmotor 16, einem mit diesem gekuppelten Hubmechanismus 20, einer Führungseinheit 25 für einen Stössel 14 mit einem aus dem Gehäuse ragenden Berührungselement 11 sowie aus einem den Stössel 14 umgebendes Federorgan 18 zusammen.

Dieses beim Gerät 10 vorstehende Berührungselement 11 ist tellerförmig ausgebildet und seine Vorderseite 11' dient als Kontaktfläche bei der Massage mit einer Hautpartie einer zu behandelnden Person oder eines Patienten. Selbstverständlich kann das Berührungselement 11 vorderseitig auch anders geformt sein, wie zum Beispiel zapfen-, kugel-, stift- oder noppenförmig. Es wird mit einem Hub von weniger oder bis zu ein paar Millimetern hin- und herbewegt und es kann dabei mit einer Anzahl von bis zu 30 Impulsen pro Sekunde betreibbar sein, um je nach Behandlungsart einen optimalen Betrieb zu ermöglichen, wobei mit dem steuerbaren Gerät 10 in Bezug auf die Schwingungsfrequenz beim Berührungselement 11 vorzugsweise variierbare Grössen eingestellt werden können.

Vorteilhaft ist dieses Berührungselement 11 frontseitig beim Stössel 14 auswechselbar befestigt, so dass je nach Bedarf ein anderes eingesetzt werden kann. Der Stössel 14 ist dabei in einer Lagerbüchse 19 in einem vorderseitig lösbaren Deckel 15' des Gehäuses 15 längsgeführt und rückseitig von der Führungseinheit 25 gehalten.

Die Führungseinheit 25 ist mit einer Innenhülse 24, wenigstens zwei Führungsstäben 22 und einem Haltering 23 versehen, wobei die Führungsstäbe 22 als Verlängerung zur Innenhülse 24 parallel vorzugsweise um 180° versetzt zueinander angeordnet und in ihrem vorderen Bereich in jeweils einer Bohrung 13 im Deckel 15' längsgeführt sind.

Zwischen der Lagerbüchse 19 und der Innenhülse 24 ist dieses Federorgan 18 angeordnet, welches vorne beim Deckel 15' des Gehäuses 15 und hinten bei der Hülse 24 abgestützt und dabei als Druckfeder ausgebildet ist. Sie ist mit einer solchen Vorspannung montiert, dass sie stets einen bestimmten Federdruck auf den Hubmechanismus 20 ausübt.

Die Hülse 24 dient als Schwungmasse, die aus unterschiedlich schweren Materialien hergestellt sein kann, wie beispielsweise aus Kunststoff, Aluminium oder Messing. Je nach verwendetem Material erfolgen die Schläge bei jedem Hub auf einen Körperteil, wie einen Muskel, unterschiedlich stark. Dies kann der Benutzer je nach Anwendung auswählen, insbesondere um die Anregung auf den Muskel variieren zu können.

Der Hubmechanismus 20 des Gerätes 10 besteht aus einem mit dem Haltering 23 der Führungseinheit 25 verbundenen Käfigring 21, einem gegenüberliegend beim Antriebsmotor 16 durch wenigstens ein Befestigungsmittel 29 fixierten Kugelkäfig 28 und aus zwei dazwischen rotierbaren Kugeln 27, die innenseitig mit einer Antriebswelle 17 des als Drehmotor ausgebildeten Antriebsmotors 16 in Drehverbindung stehen.

Gemäss Fig. 3 ist der Käfigring 21 innenseitig mit einer einen annähernd elliptischen Querschnitt aufweisenden Kegelfläche 26, 26' ausgebildet, die mit den zwei Kugeln 27 in Wälzkontakt steht. Diese elliptische Querschnittsform der Kegelfläche 26, 26' ist mit einem grösseren und einem kleineren Wälzdurchmesser D1, D2 dimensioniert, die um 90° versetzt zueinander sind. Damit wird erreicht, dass die beiden um 180° gegenüberliegend angeordneten Kugeln 27, die von der Antriebswelle 17 entlang dieser elliptischen Kegelfläche 26, 26' umlaufend angetrieben werden, eine Hubbewegung in Längsrichtung L der Führungseinheit 25 und damit des Stössels 14 bzw. des Berührungselementes 11 bewirken. Je nach der Differenz dieser Wälzdurchmesser D1, D2 kann die Hublänge bestimmt werden.

Gemäss Fig. 4 sind die beiden gegenüberliegenden Kugeln 27 aussenseitig jeweils an einer kreisrunden Kegelfläche 28' des Kugelkäfigs 28 zum Abrollen geführt. Dem Kugelkäfig 28 ist im Zentrum eine Kugelführung 38 mit Ausnehmungen 39 für die Kugeln 27 zugeordnet, der die Kugeln um diese 180° zueinander hält.

Erfindungsgemäss ist wenigstens zwischen dem Antriebsmotor 16 und dem Gehäuse 15 eine geräusch- bzw. schwingungsdämmende Lagerung angeordnet, so dass vorzugsweise ein unmittelbarer Kontakt zwischen dem Antriebsmotor 16 und dem Gehäuse 15 eliminiert und eine Entkoppelung der geräuschübertragenden Verbindung erzielbar ist.

Sehr vorteilhaft ist der Antriebsmotor 16 zumindest an seinem Umfang auf der hinteren Seite und vorne bei seiner Antriebswelle 17 beim Kugelkäfig 28 durch je ein ringförmiges Lagerelement 30, 31 innen im Gehäuse 15 abgestützt und dazwischen ein vorzugsweise ringförmiger Hohlraum 35 gebildet. Damit ist der Antriebsmotor 16 und die umlaufenden Kugeln 27 dauerhaft in der Art einer schwimmenden Lagerung konzentrisch im Gehäuse 15 gehalten.

Das ringförmige Lagerelement 31 ist am Aussenumfang des Kugelkäfigs 28 sowohl radial als auch axial gehalten. Dementsprechend ist beim Kugelkäfig 28 aussen als auch beim Gehäuse 15 innenseitig je ein nabenförmiger Absatz 28', 36 ausgebildet und dazwischen das Lagerelement 31 angeordnet, durch diese die in axialer Längsrichtung L entstehenden Kräfte vom Stössel 14 auf das Gehäuse aufgenommen bzw. die Schwingungen des Kugelkäfigs 28 vom Lagerelement 31 absorbiert werden. Solche Absätze 28', 36 könnten auch analog beim andern Lagerelement 30 zusätzlich oder alternativ vorgesehen sein.

Des weiteren zeichnet sich die Erfindung dadurch aus, dass die Führungsstäbe 22 als Verlängerung der Innenhülse 24 ebenfalls jeweils in einem vorzugsweise ringförmigen Lagerelement 32 in der Bohrung 13 im Deckel 15' des Gehäuses 15 geräusch- bzw. schwingungsdämmend geführt sind. Damit ergibt sich ein fertigungstechnischer Vorteil insofern, als die beiden Lagerelemente 32 im Durchmesser etwas Toleranzen aufnehmen und dadurch diese Bohrungen 13 nicht eine genaue Bearbeitung voraussetzen. Die Führungseinheit 25 ist damit gesamthaft beabstandet innerhalb des Gehäuses 15 angeordnet und dazwischen ist entsprechend ein Hohlraum 35' gebildet. Durch diese Anordnung stehen der Antriebsmotor 16, der mit diesem verbundene Hubmechanismus 20 mit den Kugeln 27 und die Führungseinheit 25 einzig durch diese Lagerelemente 30, 31, 32 mit dem Gehäuse 15 in Kontakt und damit ergibt sich eine erhebliche Schwingungsdämpfung beim Gehäuse, was sich äusserst günstig bei der Benutzung des Geräts auswirkt.

Die im Deckel 15' des Gehäuses 15 vorgesehene Lagerbüchse 19 für die einwandfreie Führung des Stössels 14 besteht vorzugsweise aus einem gut gleitfähigen Material, wie Teflon, so dass ebenso eine geräusch- bzw. schwingungsdämmende Lagerung gegeben ist. Diese Lagerbüchse 19 könnte aber zusätzlich vom Deckel 15' des Gehäuses 15 durch Lagerelemente zumindest radial entkoppelt sein. Zudem könnte auch das Federorgan 18 vorne beim Deckel 15' durch ein dämmendes Lagerelement abgestützt sein.

Des Weiteren ist der Haltering 23 der Führungseinheit 25 vorzugsweise aus einem gummiartigen Material hergestellt, welcher radiale Fluchtfehler zwischen der Innenhülse 24 und dem Käfigring 21 ausgleicht und auch geräuschdämmend wirkt.

Als Lagerelemente 30, 31, 32 können beispielsweise schnurförmige Kunststoffteile aus Silikon, aber auch Materialien aus anderen Kunststoffen oder solche mit schwingungsdämmenden Eigenschaften auch verstärkt verwendet werden. Sie können ring-, segment-oder andersförmig ausgebildet sein und entsprechend dazwischen eingelegt sein. Bei Verwendung von Silikon wird vorteilhaft eine Shore-Härte bis zu 70 verwendet.

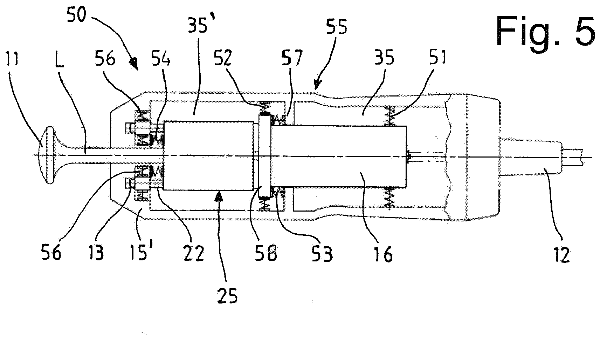

Gemäss Fig. 5 ist bei einem erfindungsgemässen Gerät 50 eine ähnliche Anordnung und Form wie beim Gerät 10 nach Fig. 1 vorgesehen. Es sind daher nachfolgend nurmehr die Unterschiede dargetan. Die gleichwirkenden Komponenten sind mit denselben Bezugszeichen versehen.

Im Wesentlichen unterscheidet sich das schematisch gezeigte Gerät 50 dadurch, dass die zwischen dem Antriebsmotor 16, dem Hubmechanismus, der Führungseinheit 25 und dem Gehäuse 55 angeordnete geräusch- bzw. schwingungsdämmende Lagerung aus Lagerelementen 51, 52, 53, 54, 56 besteht, die als Druckfedern aus Spiraldraht oder andern elastischen Materialien gefertigt sind. Von diesen wirken die einen in radialer, indes andere in axialer Längsrichtung L. Vorteilhaft sind jeweils zumindest zwei gegenüberliegende Federorgane in einer Kraftlinie verlaufend angeordnet, so dass der Antriebsmotor 16 mit dem Hubmechanismus und die Führungseinheit 25 konzentrisch im Gehäuse 55 ausgerichtet sind.

Die radial wirkenden Lagerelemente 51, 52, 56 sind aussenseitig am hintere Ende sowie vorne bei einem nabenförmigen Absatz 58 des Antriebsmotors 16 und zudem bei den hin- und herbewegenden Führungsstäben 22 platziert. Diese parallel zueinander angeordneten Führungsstäbe 22 der Führungseinheit 25 ragen in ihrem vorderen Bereich in jeweils eine Bohrung 13 im Deckel 55', wobei diese quer lagernden Lagerelemente 56 im Deckel 55' integriert sind und entsprechend geräusch- bzw. schwingungsdämmend wirken.

Die einen der axial wirkenden Lagerelemente 53 sind zwischen nabenförmigen Absätzen 57, 58 beim Gehäuse 55 und dem Hubmechanismus, indes die andern Lagerelemente 54 zwischen der Führungseinheit 25 und dem Deckel 55' des Gehäuses 55 angeordnet sind, so dass die Führungseinheit 25 und der miteinander mit dieser verbundene Antriebsmotor 16 wiederum vom Gehäuse 55 entkoppelt sind. Zwischen dem Gehäuse 55 und dem Antriebsmotor 16 bzw. der Führungseinheit 25 ist jeweils gleichsam ein Hohlraum 35, 35' gebildet.

Die Lagerelemente 51, 52, 53, 54, 56 könnten auch als Zugfedern oder aus unterschiedlichen Lagerungsarten bestehen. So könnten zum Beispiel vorne bei den Führungsstäben anstelle von Druck- oder Zugfedern Silikonringe wie beim Gerät 10 nach Fig. 1 verwendet werden. Auch die Anzahl der Lagerelemente kann je nach Bedarf variiert werden. Die radialen Lagerelemente 51, 52, 56 könnten bei einer einfacheren Ausführung auch nur am hintere Ende sowie vorne beim Absatz 58 des Antriebsmotors oder nur bei den Führungsstäben 22, während die axial ausgerichteten Lagerelemente 53, 54 beispielsweise nur bei den Absätzen 57, 58 oder nur vorne beim Deckel 55' vorhanden sein könnten.

Die Erfindung ist mit den oben erläuterten Ausführungsbeispielen ausreichend dargetan. Selbstverständlich könnte sie noch durch andere Varianten veranschaulicht sein. Das Gehäuse könnte in einer alternativen Ausführungsform, die nicht unter die Erfindung fällt, auch pistolenförmig oder so ähnlich ausgebildet sein. Die geräusch- bzw. schwingungsdämmende Lagerung wäre dann genauso zwischen dem Antriebsmotor und dem Gehäuse angeordnet, wobei der Antriebsmotor und die Führungseinheit mit dem Stössel in dem zum Handgriff vorstehenden Rohrteil analog wie beim Gerät 10 untergebracht wären.

Anstelle eines zylindrisch ausgebildeten Drehmotors könnte selbstverständlich auch ein solcher mit einem hin- und herbewegbaren Anker vorgesehen sein, der beispielsweise elektromagnetisch oder durch eine Gewindeverbindung mit einer hin- und herdrehenden Schraube bewegt wird.

Ebenso könnte der Hubmechanismus, die Führungseinheit und das Federorgan anders ausgestaltet sein. Dies könnte wie beim eingangs erläuterten bekannten Gerät mit dem Umwandlungsmechanismus ausgeführt sein, bei dem eine Ausgangswelle des Untersetzungsgetriebes mit einem Tauchkolben verbunden ist, deren Drehbewegung in eine lineare Hin- und Herbewegung des Tauchkolbens umgewandelt wird.

Im Prinzip könnte bei einer vereinfachten Variante vorgesehen sein, dass die Führungsstäbe im Deckel oder direkt im Gehäuse ohne Lagerelemente geführt sein könnten, weil sich dies weniger stark auf die Geräuschübertragung ins Gehäuse auswirkt. Es könnte auch nur ein Führungsstab vorgesehen sein, der bolzen- oder andersförmig ausgebildet sein kann. Dieser könnte auch im Deckel gehalten und in der Innenhülse 24 hin- und herbewegbar geführt sein, dies allenfalls in wenigstens einem Lagerelement (32) in der Innenhülse.

## Patentansprüche

1. Gerät, insbesondere für Massage- und Behandlungszwecke, welches einen Antriebsmotor (16) und ein von Hand tragbares Gehäuse (15, 55), ein in diesem gelagertes und vorderseitig vorstehendes, von dem Antriebsmotor (16) hin- und herbewegbares Berührungselement (11) aufweist, wobei zwischen dem Antriebsmotor (16) und dem Gehäuse (15, 55) eine geräusch- bzw. schwingungsdämmende Lagerung angeordnet ist, so dass ein unmittelbarer Kontakt zwischen dem Antriebsmotor (16) und dem Gehäuse (15, 55) eliminiert ist, wobei der Antriebsmotor (16) zumindest an seinem Umfang auf der hinteren Seite und vorne bei seiner Antriebswelle (17) durch je ein Lagerelement (30, 31, 51, 52, 53, 54, 56) innen im Gehäuse (15, 55) abgestützt und dazwischen ein Hohlraum (35) gebildet ist, wobei
das Gerät (10) mit dem von Hand tragbaren Gehäuse (15, 55) stabförmig ausgebildet und zumindest das eine Lagerelement (31) der Lagerung sowohl in axialer als auch in radialer Richtung abgestützt ist, wobei beim Antriebsmotor (16) aussen als auch beim Gehäuse (15) innenseitig je ein nabenförmiger Absatz (28', 36) ausgebildet und dazwischen das Lagerelement (31) angeordnet ist, durch welche die vom Berührungselement (11) auf das Gehäuse (15) in axialer Längsrichtung (L) entstehenden Kräfte aufgenommen und die Schwingungen vom Lagerelement (31) absorbiert werden.

2. Gerät nach Anspruch 1, **dadurch gekennzeichnet, dass** zumindest das andere Lagerelement (30) nur radial geräusch- bzw. schwingungsdämmend abgestützt ist.

3. Gerät nach Anspruch 1 oder 2, **dadurch gekennzeichnet, dass** im Gehäuse (15, 55) ein vom Antriebsmotor (16) angetriebener Hubmechanismus (20), eine mit diesem gekoppelte Führungseinheit (25) für einen Stössel (14) mit dem vorderseitigen Berührungselement (11) integriert ist, wobei vorderseitig wenigstens ein Führungsstab (22) der Führungseinheit (25) jeweils in einem Lagerelement (32, 56) in einer Bohrung (13) im Gehäuse (15, 55) geräusch- bzw. schwingungsdämmend geführt ist, so dass die Führungseinheit (25) beabstandet innerhalb des Gehäuses (15, 55) angeordnet ist.

4. Gerät nach einem der vorhergehenden Ansprüche 1 bis 3, **dadurch gekennzeichnet, dass**
der Antriebsmotor (16), der mit diesem verbundene Hubmechanismus (20) und die Führungseinheit (25) einzig durch diese Lagerelemente (30, 31, 32, 51, 52, 53, 54, 56) mit dem Gehäuse (15, 55) in Kontakt stehen.

5. Gerät nach einem der vorhergehenden Ansprüche 1 bis 4, **dadurch gekennzeichnet, dass**
die Lagerelemente (30, 31, 32, 51, 52, 53, 54, 56) ring-, segment- oder andersförmig ausgebildet sind und aus Kunststoff, wie aus einem schnurförmigen Silikon oder dergleichen, aus Materialien mit schwingungsdämmenden Eigenschaften, oder dass die Lagerelemente (52, 53, 54, 56) aus Druck- oder Zugfedern bestehen.

6. Gerät nach einem der vorhergehenden Ansprüche 1 bis 5, **dadurch gekennzeichnet, dass**
der Hubmechanismus (20) mit einem mit einer Führungseinheit (25) verbundenen Käfigring (21), einem gegenüberliegend beim Antriebsmotor (16) fixierten Kugelkäfig (28) und aus vorzugsweise zwei dazwischen rotierbaren Kugeln (27) versehen ist, die innenseitig mit einer Antriebswelle (17) des als Drehmotor ausgebildeten Antriebsmotors (16) in Drehverbindung stehen.

7. Gerät nach Anspruch 6, **dadurch gekennzeichnet, dass**
der Käfigring (21) innenseitig mit einer einen annähernd elliptischen Querschnitt aufweisenden Kegelfläche (26, 26') ausgebildet ist, die mit den zwei Kugeln (27) in Wälzkontakt steht und eine Hubbewegung in Längsrichtung (L) der Führungseinheit (25) und damit des Stössels (14) bzw. des Berührungselementes (11) bewirkt.

8. Gerät nach einem der vorhergehenden Ansprüche 3 bis 7, **dadurch gekennzeichnet, dass**
die Führungseinheit (25) mit einer Innenhülse (24), dem wenigstens einem Führungsstab (22) und einem Haltering (23) versehen ist, wobei der Führungsstab (22) jeweils im vorderen Bereich in der Bohrung (13) in einem Deckel (15') des Gehäuses (15, 55) längsgeführt ist.

9. Gerät nach Anspruch 8, **dadurch gekennzeichnet, dass**
der Haltering (23) der Führungseinheit (25) aus einem gummiartigen oder ähnlichen Material hergestellt ist, welcher radiale Fluchtfehler zwischen der Innenhülse (24) und dem Käfigring (21) ausgleicht und auch geräuschdämmend wirkt.

10. Gerät nach Anspruch 8 oder 9, **dadurch gekennzeichnet, dass** zwischen einer Lagerbüchse (19) im Deckel (15') und der Innenhülse (24) ein Federorgan (18) angeordnet ist, das vorne beim Deckel (15') des Gehäuses (15) und hinten bei der Innenhülse (24) abgestützt und dabei als Druckfeder ausgebildet ist, damit das Berührungselement (11) stets gegen den Hubmechanismus (20) mit den umlaufenden Kugeln (27) gedrückt ist.

## Claims

1. Device, in particular for massage and treatment purposes, comprising a drive motor (16) and a housing (15, 55) which can be carried by hand, mounted in this and projecting at the front side a contact element (11) which can be moved backwards and forwards by the drive motor (16), wherein arranged between the drive motor (16) and the housing (15, 55) is a bearing arrangement which dampens both noise and vibration, such that a direct contact between the drive motor (16) and the housing (15, 55) is eliminated, wherein the drive motor (16) is supported at least at its circumference on the rear side and at the front at its drive shaft (17) in each case by a bearing element (30, 31, 51, 52, 53, 54, 56) in the interior of the housing (15, 55), and a cavity (35) is formed in between, wherein
the device (10) with the housing (15, 55), which can be carried by hand, is formed in the of a rod, and at least the one bearing element (31) of the bearing arrangement is supported both the axial as well as in the radial direction, wherein, at the drive motor (16) on the as well as at the housing (15) on the inside, a hub-shaped shoulder element (28', 36) is formed in each case, and arranged in between is the bearing element (31), by means of the forces are absorbed which are incurred by the contact element (11) onto the housing in the axial longitudinal direction (L), and the vibrations are absorbed by the bearing element (31).

2. Device according to claim 1, **characterized in that**
at least the other bearing element (30) is supported only radially in a noise and vibration damping manner.

3. Device according to claim1 or 2, **characterized in that**
integrated in the housing (15, 55) is a lifting mechanism (20), driven by the drive motor (16), coupled to this a guide unit (25) for a plunger (14) with the front-side contact element (11), wherein on the front side at least one guide rod (22) of the guide unit (25) is guided in each case in a bearing element (32, 56) in a hole (13) in the housing (15, 55) such as to dampen noise and vibration, such that the guide unit (25) is arranged at a distance interval inside the housing (15, 55).

4. Device according to any one of the preceding claims 1 to 3, **characterized in that** the drive motor (16), the lifting mechanism (20) connected to this, and the guide unit (25) are individually in contact with the housing (15, 55) by means of these bearing elements (30, 31, 32, 51, 52, 53, 54, 56).

5. Device according to any one of the preceding claims 1 to 4, **characterized in that** the bearing elements (30, 31, 32, 51, 52, 53, 54, 56) are formed in a ring shape, segment shape, or other shape, and consist of plastic, such as of a string- forming silicone or the like, of materials with vibration-damping properties, or that the bearing elements (52, 53, 54, 56) consist of pressure springs or tension springs.

6. Device according to any one of the preceding claims 1 to 5, **characterized in that** the lifting mechanism (20) is provided with a cage ring (21) connected to a guide unit (25), a spherical cage (28) fixed opposite this at the drive motor, and of preferably two spheres (27) which can rotate between them, which are in rotational connection on the inside with a drive shaft (17) of the drive motor (16) configured as a rotary motor.

7. Device according to claim 6, **characterized in that**
the cage ring (21) is formed on the inside with a conical surface (26, 26') exhibiting an approximately elliptical cross-section, which is in rolling contact with the two spheres (27) and causes a lifting movement in the longitudinal direction (L) of the guide unit (25) and therefore of the plunger (14) or of the contact element (11) respectively.

8. Device according to any one of the preceding claims 3 to 7, **characterized in that** the guide unit (25) is provided with an inner sleeve (24), the at least one guide rod (22), and a holding ring (23), wherein the guide rod (22) is guided longitudinally in each case in the front region in the hole (13) in a cover (15') of the housing (15, 55).

9. Device according to claim 8, **characterized in that**
the holding ring (23) of the guide unit (25) is produced from a type of rubber or similar material, which compensates for radial alignment errors between the inner sleeve (24) and the cage ring (21), and also has the effect of damping noise.

10. Device according to claim 8 or 9, **characterized in that**
a spring element (18) is arranged between a bearing sleeve (19) in the cover (15') and the inner sleeve (24), which is supported at the front at the cover (15') of the housing (15) and at the rear at the inner sleeve (24), and in this situation is configured as a pressure spring, such that the contact element (11) is constantly pressed against the lifting mechanism (20) with the circulating spheres (27).

## Revendications

1. Appareil, en particulier à des fins de massage et de traitement, lequel présente un moteur d'entraînement (16) et un boîtier (15, 55) pouvant être porté à la main, un élément de contact (11) monté dans celui-ci et faisant saillie côté avant, pouvant être déplacé en va-et-vient par le moteur d'entraînement (16), dans lequel un palier d'amortissement de bruits et de vibrations est disposé entre le moteur d'entraînement (16) et le boîtier (15, 55) de telle sorte qu'un contact direct entre le moteur d'entraînement (16) et le boîtier (15, 55) est éliminé, dans lequel le moteur d'entraînement (16) est soutenu à l'intérieur dans le boîtier (15, 55) par respectivement un élément de support (30, 31, 51, 52, 53, 54, 56) au moins sur sa périphérie sur le côté arrière et à l'avant de son arbre d'entraînement (17) et un espace creux (35) se forme de manière intercalée, dans lequel
l'appareil (10) est réalisé en forme de tige avec le boîtier (15, 55) pouvant être porté à la main et au moins un élément de support (31) du palier est soutenu à la fois dans la direction axiale et dans la direction radiale, dans lequel est réalisé à l'extérieur du moteur d'entraînement (16) et également côté intérieur du boîtier (15) respectivement un épaulement (28', 36) en forme de moyeu et l'élément de support (31) est disposé de manière intercalée, par lequel les forces apparaissant sur le boîtier (15) dans la direction longitudinale axiale (L) sont absorbées par l'élément de contact (11) et les vibrations sont absorbées par l'élément de support (31).

2. Appareil selon la revendication 1, **caractérisé en ce qu'**
au moins l'autre élément de support (30) est soutenu de manière à amortir les bruits ou les vibrations seulement radialement.

3. Appareil selon la revendication 1 ou 2, **caractérisé en ce que**
sont intégrés dans le boîtier (15, 55) un mécanisme de levage (20) entraîné par le moteur d'entraînement (16), une unité de guidage (25) couplée à celui-ci pour un coulisseau (14) avec l'élément de contact (11) côté avant, dans lequel au moins une tige de guidage (22) de l'unité de guidage (25) est guidée, côté avant, de manière à amortir les bruits ou les vibrations respectivement dans un élément de support (32, 56) dans un alésage (13) dans le boîtier (15, 55) de telle sorte que l'unité de guidage (25) est disposée à distance à l'intérieur du boîtier (15, 55).

4. Appareil selon l'une quelconque des revendications précédentes 1 à 3, **caractérisé en ce que**
le moteur d'entraînement (16), le mécanisme de levage (20) relié à celui-ci et l'unité de guidage (25) sont en contact avec le boîtier (15, 55) uniquement par lesdits éléments de support (30, 31, 32, 51, 52, 53, 54, 56).

5. Appareil selon l'une quelconque des revendications précédentes 1 à 4, **caractérisé en ce que**
les éléments de support (30, 31, 32, 51, 52, 53, 54, 56) sont réalisés en forme d'anneau, de segment ou autre et sont constitués de matière plastique, par exemple d'un silicone en forme de cordon ou similaire, de matériaux avec des propriétés d'amortissement de vibrations, ou que les éléments de support (52, 53, 54, 56) sont constitués de ressorts de compression ou de traction.

6. Appareil selon l'une quelconque des revendications 1 à 5, **caractérisé en ce que**
le mécanisme de levage (20) est pourvu d'un anneau de cage (21) relié à une unité de guidage (25), d'une cage à billes (28) fixée à l'opposé du moteur d'entraînement (16) et composée de préférence de deux billes (27) pouvant tourner entre eux, qui sont en liaison de rotation côté intérieur avec un arbre d'entraînement (17) du moteur d'entraînement (16) réalisé en tant que moteur rotatif.

7. Appareil selon la revendication 6, **caractérisé en ce que**
l'anneau de cage (21) est réalisé côté intérieur avec une surface conique (26, 26') présentant une section transversale approximativement elliptique, qui est en contact de roulement avec les deux billes (27) et qui entraîne un déplacement de levage dans la direction longitudinale (L) de l'unité de guidage (25) et ainsi du coulisseau (14) ou de l'élément de contact (11).

8. Appareil selon l'une quelconque des revendications 3 à 7, **caractérisé en ce que**
l'unité de guidage (25) est pourvue d'un manchon intérieur (24), de l'au moins une tige de guidage (22) et d'un anneau de maintien (23), dans lequel la tige de guidage (22) est guidée longitudinalement respectivement dans la zone avant dans l'alésage (13) dans un couvercle (15') du boîtier (15, 55).

9. Appareil selon la revendication 8, **caractérisé en ce que**
l'anneau de maintien (23) de l'unité de guidage (25) est fabriqué à partir d'un matériau de type caoutchouc ou similaire, lequel compense des erreurs d'alignement radial entre le manchon intérieur (24) et l'anneau de cage (21) et exerce également une action d'amortissement des bruits.

10. Appareil selon la revendication 8 ou 9, **caractérisé en ce qu'**
est disposé, entre un coussinet (19) dans le couvercle (15') et le manchon intérieur (24), un organe de ressort (18), qui est soutenu à l'avant du couvercle (15') du boîtier (15) et à l'arrière du manchon intérieur (24) et est réalisé dans ce cadre en tant que ressort de compression afin que l'élément de contact (11) soit pressé en permanence contre le mécanisme de levage (20) avec les billes (27) qui tournent.
